Europäisches Patentamt

(19) European Patent Office

Office européen des brevets

(11) Numéro de publication: **0 060 163**
**B1**

(12) **FASCICULE DE BREVET EUROPEEN**

(45) Date de publication du fascicule du brevet:
**21.11.84**

(21) Numéro de dépôt: **82400276.0**

(22) Date de dépôt: **17.02.82**

(51) Int. Cl.³: **D 06 B 5/16,** D 06 B 19/00

(54) Perfectionnements apportés aux machines pour le traitement liquide ou gazeux de matières textiles ou d'autres matières fibreuses ou poreuses.

(30) Priorité: **05.03.81 FR 8104401**

(43) Date de publication de la demande:
**15.09.82 Bulletin 82/37**

(45) Mention de la délivrance du brevet:
**21.11.84 Bulletin 84/47**

(84) Etats contractants désignés:
**BE CH DE GB IT LI SE**

(56) Documents cités:
**DE - A - 2 451 829**
**FR - A - 2 253 865**
**FR - A - 2 283 976**
**FR - A - 2 444 741**

(73) Titulaire: **BARRIQUAND, Société dite:, 9 à 13 Rue Saint Claude, F-42300 Roanne (FR)**

(72) Inventeur: **Barriquand, Robert, 70, rue Roger Salengro, F-42300 Roanne (FR)**
Inventeur: **Barriquand, Bernard, 46, rue Pierre Dépierre, F-42300 Roanne (FR)**
Inventeur: **Durantet, Bernard, 6, rue des Noix, Riorges, F-42300 Roanne (FR)**
Inventeur: **Machabert, Bernard, 5, rue Pasteur, Riorges, F-42300 Roanne (FR)**
Inventeur: **Villard, François, 3, rue Beaulieu, Riorges, F-42300 Roanne (FR)**

(74) Mandataire: **Ores, Irène et al, CABINET ORES 6, Avenue de Messine, F-75008 Paris (FR)**

**Description**

La présente invention est relative à une machine perfectionnée pour le traitement liquide (eau, solvants, etc...) ou gazeux (mousse par exemple) de matières textiles et notamment pour le lavage, la teinture et le blanchiment de matières textiles, aussi bien de matières textiles avant filature — en bourre —, que de matières textiles en cours de filature — rubans de peignée, tops, par exemple — et de matières après filature, en forme de fil ou après tissage ou tricotage, ainsi que pour le traitement de matières fibreuses ou poreuses destinées à la papeterie, notamment.

L'on connaît des machines de lavage, teinture, et blanchiment de matières textiles à haute température pouvant atteindre 140°C, dans lesquelles les traitements sont réalisés par circulation du bain à travers la matière textile statique. Ces machines sont conçues soit pour traiter la matière textile immergée, avec circulation du bain dans les deux sens, soit pour traiter la matière textile non immergée, avec un niveau de bain sous le porte-matière et un rapport de bain très court. Dans ces machines, l'espace libre intérieur qui se trouve au-dessus de la matière textile immergée ou non, est rempli d'un matelas de gaz, tel qu'azote ou air comprimé, qui est maintenu sous une pression constante, réglable, dont la valeur est supérieure à la tension de vapeur à la température du traitement en tout point de l'autoclave.

Bien que les performances techniques de ces machines soient très bonnes, il s'avère nécessaire de les améliorer encore en réduisant dans toute la mesure du possible, le volume du bain traiteur en circulation, et par voie de conséquence, la consommation d'énergie.

Il est également connu de pourvoir des machines pour la teinture de matières textiles, d'une plaque de support des porte-matière, éventuellement amovible, qui vient s'appuyer sur un faux-fond dont est pourvue la partie inférieure de la machine de teinture de matières textiles. Toutefois, l'espace délimité entre ce faux-fond et le fond de la machine est un espace non étanche, dans lequel le bain de teinture est amené à circuler: c'est ce que montre en particulier la Demande de Brevet Allemand publiée avant examen DE-A-2 451 829, dans laquelle il est expressément mentionné que le faux-fond sert de surface de guidage du bain en même temps que de support au caisson qui supporte le porte-matière; cette Demande de Brevet JAGRI prévoit également la disposition d'un échangeur de chaleur dans la partie inférieure de la machine, au-dessous du faux-fond; cependant, ni cette partie inférieure, ni l'échangeur de chaleur ne sont isolés de la circulation du bain.

Des installations de teinture de bobines de textiles dans une enceinte étanche à la pression et aux liquides sont également connues par le Brevet Français FR-A-2 283 976, dans lequel le caisson d'alimentation en bain, sur lequel sont montés les tubes de support des bobines, est relié, au choix, au côté aspiration d'une pompe de circulation du bain de teinture.

Il est également connu par le Brevet Français FR-A-2 253 865, de diviser une enceinte de teinture de matières textiles en une cuve séparée de la partie inférieure de l'enceinte par un caisson d'alimentation en bain des supports du porte-matière; cependant, selon ce Brevet, le caisson est contenu dans une cuve inférieure dans laquelle circule le bain de teinture et dans laquelle sont montés des systèmes de chauffage et de refroidissement qui, compte tenu de ce qui est décrit dans ce Brevet, doivent être des échangeurs de chaleur. Des chicanes sont en outre disposées dans le cuve pour assurer la stabilité du bain.

Cependant, l'Art antérieur n'apporte pas de solution à la réduction des volumes morts de la machine de traitement et nécessite la circulation d'un volume relativement important de bain de traitement.

La présente Invention s'est en conséquence donné pour but de pourvoir à une machine de traitement de matières textiles ou d'autres matières fibreuses ou poreuses, en milieu liquide ou gazeux, tel que lavage, teinture et blanchiment, qui répond mieux encore aux nécessités de la pratique que les machines du même type proposées dans l'Art antérieur, en ce qu'elle permet une réduction importante de la consommation d'énergie de ce type de machine, liée à une réduction du volume du bain traiteur en circulation résultant d'aménagements apportés à ces machines.

La présente Invention a pour objet une machine pour le traitement liquide ou gazeux de matières textiles ou d'autres matières fibreuses ou poreuses, et notamment pour le lavage, la teinture et le blanchiment de matières textiles, laquelle machine est équipée d'un porte-matière et est caractérisée en ce qu'elle est équipée dans sa partie inférieure d'un faux-fond, ou plateforme d'isolation, dépourvu de perforations, qui délimite avec le fond de la machine un espace ou caisson étanche qui ne contient pas de bain et dans lequel il ne circule pas de bain, ledit caisson étanche étant rempli d'air et comportant un logement adapté pour recevoir un échangeur de chaleur, et en ce qu'elle est en outre caractérisée par le fait que le faux-fond ou plateforme d'isolation comporte une ouverture axiale dans laquelle est montée de façon étanche l'extrêmité supérieure d'une tuyauterie d'axe vertical, dont l'autre extrêmité est reliée de façon étanche avec le logement contenant l'échangeur de chaleur, par une ouverture pratiquée dans le fond de la machine, tandis qu'une pompe extérieure réversible, de préférence à axe horizontal, actionnée par un moteur à vitesse variable, apte à faire circuler le bain soit dans la direction allant de l'ouverture pratiquée dans le fond de la machine vers l'ouverture pratiquée dans le faux-fond, soit dans la direction opposée, à un débit variable, est interposée dans ladite tuyauterie.

Selon un mode de réalisation avantageux de l'objet de l'Invention, le caisson étanche est mis en communication étanche avec la partie supérieure de la machine par l'intermédiaire d'au moins une canalisation, une telle communication déterminant la pressurisation dudit caisson pour établir un équilibre de pression entre l'atmosphère gazeuse qui surmonte la bain dans la partie de la machine située au-dessus du faux-fond dans lequel le bain est en circulation, et le caisson étanche.

Selon une disposition avantageuse de ce mode de réalisation, la communication étanche au bain de traitement établie entre le caisson et l'atmosphère gazeuse qui surmonte le bain, dans la partie de la machine située au-dessus du faux-fond, est réalisée par l'intermédiaire d'au moins une canalisation extérieure.

Selon une autre disposition avantageuse de ce mode de réalisation, la communication étanche au bain de traitement établie entre le caisson et l'atmosphère gazeuse qui surmonte le bain, dans la partie de la machine située au-dessus du faux-fond, est réalisée par l'intermédiaire d'au moins une canalisation intérieure.

Selon encore un autre mode de réalisation avantageux de l'objet de l'Invention, la machine est équipée d'un dispositif de réception des porte-matière, situé à la partie supérieure de la tuyauterie axiale susdite, dans un plan horizontal sensiblement situé au-dessus du rayon de carre de la machine.

Conformément à l'Invention, des corps morts sont prévus entre les portes-matière, pour occuper toutes les zones mortes situées entre les piles de matière à traiter portées par les porte-matière, réduisant ainsi de façon supplémentaire le volume intérieur de la machine et, par voie de conséquence, le volume de bain en circulation.

Selon une disposition avantageuse de ce mode de réalisation, lesdits corps morts sont solidaires des porte-matière.

Selon une autre disposition avantageuse de l'Invention, la paroi intérieure qui constitue le faux-fond est soit sensiblement horizontale, soit légèrement inclinée suivant une pente descendante depuis la paroi de la machine en direction de la tuyauterie axiale.

Conformément à l'invention, dans la variante selon laquelle la communication entre la partie supérieure de la machine et l'espace compris entre le fond de celle-ci, le faux-fond et la tuyauterie axiale, est réalisée par l'intermédiaire de canalisations intérieures, ces dernières peuvent être, de même que le faux-fond, fixes, auquel cas elles sont avantageusement fixées à la paroi intérieure de la machine.

Egalement conformément à l'invention, lesdites canalisations intérieures peuvent être amovibles, tandis que le faux-fond est fixe, ou bien elles peuvent être amovibles, de même que le faux-fond. Dans ce dernier cas, il est avantageux, conformément à l'invention, de solidariser le faux-fond et les canalisations intérieures.

Selon une disposition avantageuse de l'invention, les corps morts prévus entre les porte-matière sont solidaires non pas de ces derniers, mais du faux-fond, ce qui présente un avantage important dans le cas d'un faux-fond amovible solidaire de canalisation intérieures pour la communication avec la partie supérieure de la machine, également amovibles, attendu que l'on peut mettre en place dans la machine un ensemble solidaire faux-fond/canalisations intérieures/ corps morts pour le traitement de matières sur un type de porte-matière donné et le retirer pour le remplacer par un autre ensemble, également amovible, adapté à des types de porte-matière de dimensions différentes, portant, par exemple, des bobines de diamètre différent de celles susceptibles d'être portées par le type précédent de porte-matière.

Selon un autre mode de réalisation avantageux de l'Invention, au moins un caisson de répartition du bain de traitement, dans lequel circule le bain, est associé aux porte-matière, à la base de la partie de la machine située au-dessus du faux-fond, le bain parvenant dans ledit caisson et y étant ramené par la canalisation raccordée audit caisson au niveau de l'ouverture axiale pratiquée dans le faux-fond, ledit caisson étant en outre pourvu de perforations qui assurent le retour plus rapide du bain vers le fond de la machine et sa reprise plus rapide résultante par la pompe.

Outre les disposition qui précèdent, l'Invention comprend encore d'autres disposition qui ressortiront de la Description qui va suivre.

La présente Invention vise plus particulièrement des machines de traitement liquide ou gazeux de matières textiles ou d'autres matières fibreuses ou poreuses, conformes aux disposition qui précèdent, ainsi que les moyens propres à leur réalisation et à leur mise en oeuvre, et les processus de traitement liquide ou gazeux de ces matières, utilisant de telles machines.

L'invention sera mieux comprise à l'aide du complément de description qui va suivre, qui se réfère aux dessins annexés dans lesquels:

— la figure 1 est une vue schématique en coupe longitudinale d'un mode de réalisation de la machine de traitement de matières textiles ou autres conforme à la présente Invention,

— la figure 2 est une vue schématique de la face supérieure du faux-fond conforme à l'invention, avec des canalisations intérieures qui assurent la communication entre l'espace délimité par le fond de la machine et le faux-fond et la partie supérieure de la machine, et plus particulièrement:

— la figure 2A représente des canalisations intérieures fixes, et

— la figure 2B représente des canalisations intérieures amovibles,

— la figure 3 est une vue schématique en coupe longitudinale analogue à celle de la figure 1, avec des canalisations extérieures de communication entre l'espace délimité par le fond de la machine et le faux-fond, et la partie supérieure de la machine,

— la figure 4 est une vue schématique en coupe transversale montrant la disposition relative du faux-fond, des porte-matière, des corps morts et des perforations de retour du bain,

— la figure 5 est une vue schématique en coupe longitudinale d'un mode de réalisation de la machine, dans lequel le faux-fond et les canalisations intérieures sont solidaires et amovibles,

— la figure 6 est une vue du faux-fond de la machine représentée à la figure 5,

— la figure 7 est une vue schématique en coupe longitudinale d'un mode de réalisation de la machine, dans lequel le faux-fond, les canalisations intérieures et les corps morts sont solidaires et amovibles, et

— la figure 8 est une vue du faux-fond de la machine représentée à la figure 7.

Il doit être bien entendu, toutefois, que ces dessins et les parties descriptions correspondantes sont donnés uniquement à titre d'illustration de l'objet de l'invention, dont ils ne constituent en aucune manière une limitation.

La machine de traitement liquide ou gazeux de matières textiles ou d'autres matières fibreuses ou poreuses conforme à l'invention est constituée par un autoclave désigné d'une façon générale par la référence 1, pour le traitement de matière, textile ou autre, statique, portée par des porte-matière 2, par circulation d'un bain de traitement. Cette machine comporte un faux-fond 3, des préférence en métal, qui comporte une ouverture axiale 4 destinée à recevoir l'extrémité supérieure d'une tuyauterie 5 d'axe vertical. Une ouverture 6 latérale est pratiqée dans le fond de la machine, au niveau de la calotte sphérique 7 de cette dernière. La tuyauterie axiale 5 et l'ouverture 6 sont reliées à une pompe extérieure 8 à axe horizontal située sous l'autoclave 1, pour assurer la communication entre ladite pompe et l'enceinte intérieure de l'autoclave et la circulation du bain de traitement. La pompe 8 est de n'importe quel type approprié et peut être, notamment, une pompe hélico-centrifuge réversible, actionnée par un moteur à vitesse variable 29, qui peut faire circuler le bain soit dans la direction allant de l'ouverture 6 vers la tuyauterie 5, soit dans la direction opposée, ou une pompe centrifuge équipée d'un système de robinet inverseur, ou toute autre pompe apte à assurer la circulation voulue du bain de traitement dans la machine.

Le faux-fond 3 comporte en outre une ouverture 9 ménagée sensiblement dans l'axe de l'ouverture 6 pratiquée dans le fond 7 de l'autoclave 1, conçue pour recevoir un échangeur de chaleur 10 des tout type convenable, et notamment un échangeur de chaleur compact soudé.

Le socle 11 solidaire de la tuyauterie 5 porte un cône 12 de réception des porte-matière 2 dans lesquels le bain de traitement est répartie par l'intermédiaire d'un caisson 13 de répartition du bain dans lequel sont ménagées des perforations 14 pour le retour rapide du bain vers le fond de l'autoclave 1, en vue de sa reprise par la pompe 8.

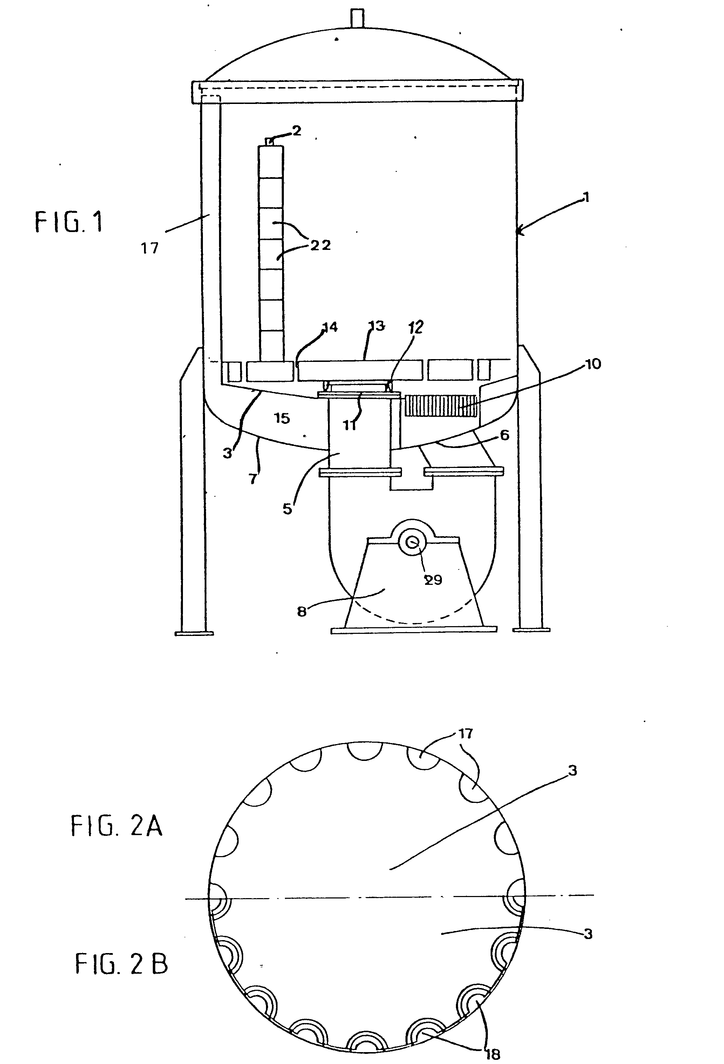

La partie de l'autoclave délimitée par le faux-fond 3, le fond 7 et la tuyauterie 5, qui sera désignée ci-après par la référence 15, peut être totalement isolée du reste de l'autoclave, comme suggéré par la figure 1.

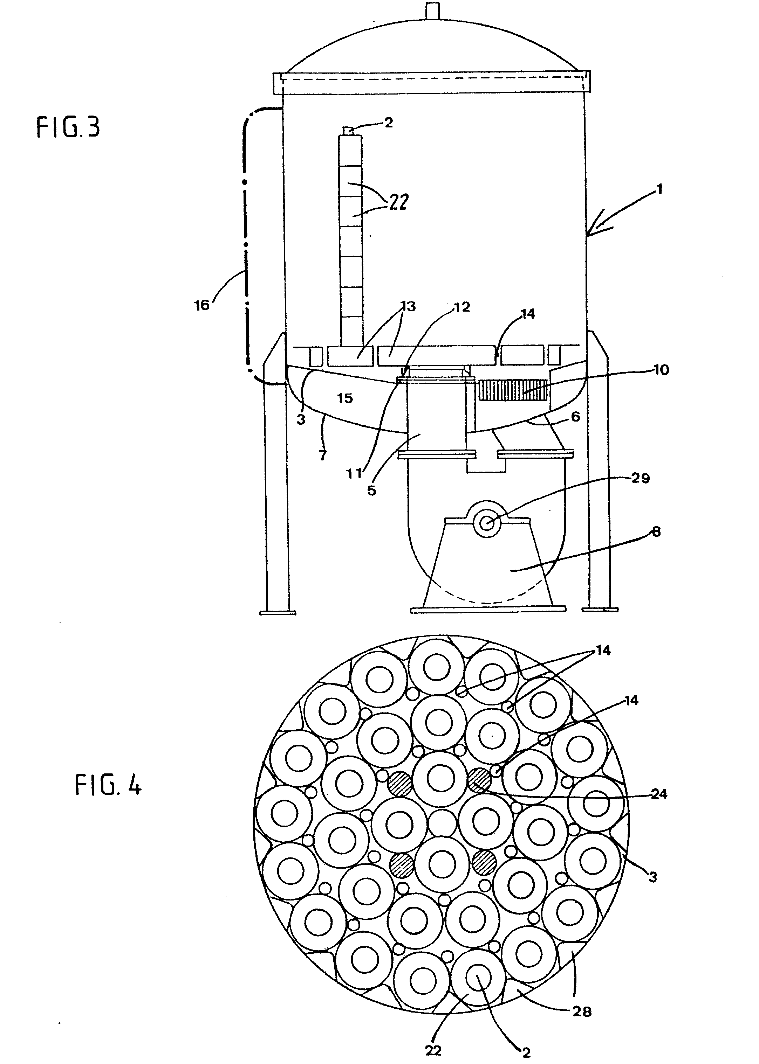

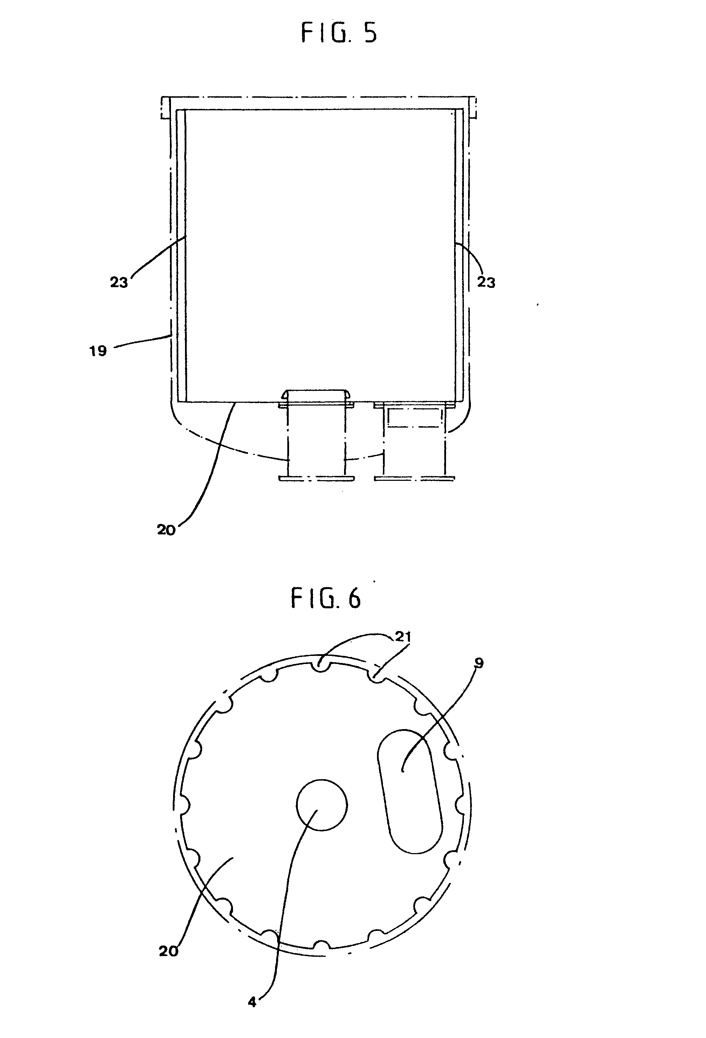

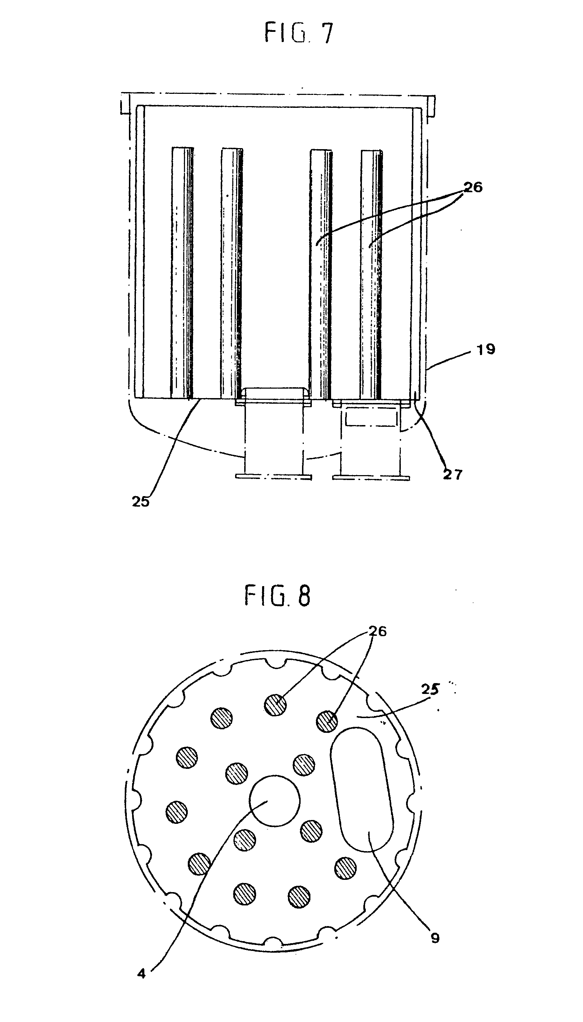

L'espace 15 peut également être mis en communication avec la partie supérieure de l'autoclave, soit par une ou plusieures canalisations extérieures 16, comme représenté à la figure 3, soit par une ou plusieurs canalisations intérieures. Ces canalisations intérieures peuvent être soit des canalisations non-amovibles 17, fixées à la paroi intérieure de l'autoclave (cf. fig. 2A), soit des canalisations amovibles 18 (cf. fig. 2B). Le faux-fond peut être soit fixe comme représenté aux figures 1 à 4, soit amovible comme représenté aux figures 5 à 8.

La vidange des condensations qui sont susceptibles de se former dans l'espace 15, est assurée par tous moyens appropriés tels qu'une vanne, par exemple.

La disposition d'un faux-fond amovible est particulièrement avantageuse dans le cas où les canalisations intérieures qui assurent la communication entre l'espace 15 et la partie supérieure de l'autoclave, sont des canalisations amovibles, car elle permet de solidariser lesdites canalisations intérieures au faux-fond et de constituer ainsi un ensemble amovible dont les dimensions sont adaptées aux dimensions des différents types de porte-matière susceptibles d'être utilisés dans l'autoclave 1, c'est-à-dire par exemple, adaptés aux différents diamètres de bobines 22 de matières textiles à traiter empilées sur les porte-matières 2.

Un tel mode de réalisation est représenté aux figures 5 et 6 où l'autoclave 19 est équipé d'un faux-fond 20 amovible pourvu d'une ouverture axiale 4 destinée à recevoir l'extrémité supérieure de la tuyauterie 5 et d'une ouverture latérale 9 destinée à recevoir un échangeur de chaleur. Le faux-fond 20 comporte à sa périphérie des logements 21 destinés à recevoir des canalisations intérieures 23 qui sont rendues solidaires du faux-fond 20. Lorsque, pour permettre le traitement de diamètres de bobines de matières textiles différents, on change de porte-matière, il est alors possible de retirer de l'autoclave 19 l'ensemble amovible 20—21 pour le remplacer par un autre ensemble faux-fond 20 canalisation 21 des dimensions adaptées à celles des nouveaux porte-matière mis en place dans l'autoclave.

Les canalisations intérieures débouchent au-dessus da la partie supérieure des porte-matière, de telle sorte que, même lorsque le niveau du bain dans l'appareil est sensiblement au-dessus de la partie supérieure des porte-matière 2, l'extrémité supérieure des canalisations, qu'elles soient intérieures ou extérieures, soit située au-dessus du niveau du bain. Il résulte que l'espace 15 est mis en communication avec l'atmosphère gazeuse qui surmonte le bain, ce qui a pour effet d'assurer l'égalité des pressions respectives de l'atmosphère gazeuse dans l'espace 15 et de l'atmosphère gazeuse qui surmonte le bain.

Les canalisations intérieures contribuent à éliminer les espaces morts entre les bobines situées à la périphérie du porte-matière et à diminuer, de ce fait, davantage encore le rapport de bain. Les canalisations intérieures ou extérieures peuvent également servir au rinçage continu en niveau haut de la matière textile lorsque cette dernière est immergée.

La disposition d'un faux-fond, amovible ou non, dans l'autoclave permet d'éliminer pratiquement les espaces morts à la base de l'autoclave, non utilisables directement pour le traitement et des réduire, de ce fait, le volume du bain de traitement à celui qui est juste nécessaire au traitement. Cependant, il est possible de réduire davantage encore le volume du bain en équipant l'autoclave de corps morts vericaux qui occupent les zones mortes entre des piles 22 de matières textiles à traiter portées par des porte-matière 2 adjacents.

Selon un mode de réalisation avantageux de l'invention, ces corps morts 24 sont solidaires des porte-martière 2 (cf. fig. 4). Selon un autre mode de réalisation avantageux de l'invention, les corps morts 26 sont solidaires du faux-fond 25, qui est également solidaire des canalisations intérieures 27: l'on obtient ainsi un ensemble solidaire amovible 25—26—27 remplaçable par un autre ensemble solidaire similaire dont les dimensions sont adaptées au type de porte-matière utilisé pour le traitement de différentes matières textiles.

A noter que la référence 28 de la figure 4 désigne soit des canalisations intérieures associées au faux-fond 3, soit des corps morts périphériques qui réduisent davantage encore les espaces morts de l'autoclave et permettent, de ce fait, une réduction supplémentaire du volume de bain nécessaire au traitement.

On obtient grace à la combinaison du faux-fond, des corps morts et des canalisations, notamment des canalisations intérieures, une machine de traitement liquide ou gazeux de matières textiles, ou d'autres matières fibreuses ou poreuses, dans laquelle le volume, ou rapport, de bain nécessaire au traitement est considérablement réduit comparativement aux machines connues dans l'Art antérieur, cette réduction impliquant une économie d'eau et une économie d'énergie qui résulte de la réduction des quantités d'eau nécessaires au traitement, et une productivité améliorée. De plus, les rejets polluants (produits chimiques, matières colorantes) sont réduits, par voie de conséquence, représentant une diminution notable de la pollution de l'environnement. En outre, la disposition particulière de la pompe a pour effet d'optimiser les performances de cette dernière et de réduire la consommation d'énergie pour le fonctionnement de la pompe, compte tenu du circuit du bain de traitement. Les expérimentations réalisées par la Demanderesse ont montré que la machine conforme à l'invention permet de réaliser des économies d'eau et d'énergie de 20 à 30% par rapport aux machines visant au même but, les plus performantes connues.

Ainsi que cela ressort de ce qui précède, l'invention ne se limite nullement à ceux de ses modes de réalisation et d'application qui viennent d'être décrits de façon plus explicite; elle en embrasse, au contraire, toutes les variantes qui peuvent venir à l'esprit d'un technicien en la matière, sans s'écarter du cadre, ni de la portée, de la présente invention.

**Revendications**

1. Machine pour le traitement liquide ou gazeux de matières textiles ou d'autres matières fibreuses ou poreuses, et notamment pour le lavage, la teinture et le blanchiment de matières textiles, laquelle machine est équipée d'un porte-matière (2), et est caractérisée en ce qu'elle est équipée, dans sa partie inférieure, d'un faux-fond (3), ou plateforme d'isolation, dépourve de perforations, qui délimite avec le fond de la machine un espace (15) ou caisson étanche, qui ne contient pas de bain et dans lequel il ne circule pas de bain, ledit caisson étanche étant rempli d'air et comportant un logement (9) adapté pour recevoir un échangeur de chaleur (10), et en ce qu'elle est en outre caractérisée en ce que le faux-fond (3), ou plateforme d'isolation, comporte une ouverture axiale (4), dans laquelle est montée de façon étanche l'extrêmité supérieure d'une tuyauterie (5) d'axe vertical, dont l'autre extrêmité est reliée de façon étanche avec le logement (9) contenant l'échangeur de chaleur (10), par une ouverture (6) pratiquée dans le fond de la machine, tandis qu'une pompe extérieure réversible (8), de préférence à axe horizontal, actionnée par un moteur à vitesse variable (29), apte à faire circuler le bain soit dans la direction allant de l'ouverture susdite (6) vers l'ouverture (4), soit dans la direction opposée, à un débit variable, est interposée dans ladite tuyauterie (5).

2. Machine de traitement selon la Revendication 1, caractérisée en ce que le caisson étanche (15) est mis en communication étanche avec la partie supérieure de la machine, par l'intermédiaire d'au moins une canalisation, une telle communication déterminant la pressurisation dudit caisson (15) pour établir un équilibre de pression entre l'atmosphère gazeuse qui surmonte le bain dans la partie de la machine située au-dessus du faux-fond (3) dans lequel le bain est en circulation, et le caisson étanche (15).

3. Machine de traitement selon la Revendication 2, caractérisée en ce que la communication étanche au bain de traitement établie entre le caisson (15) et l'atmosphère gazeuse qui surmonte le bain, dans la partie de la machine située au-dessus du faux-fond (3), est réalisée par l'intermédiaire d'au moins une canalisation extérieure (16).

4. Machine de traitement selon la Revendication 3, caractérisée en ce que la communication étanche au bain de traitement établie entre le caisson (15) et l'atmosphère gazeuse qui surmonte la bain, dans la partie de la machine située au-dessus du faux-fond (3), est réalisée par l'intermédiaire d'au moins une canalisation intérieure (17).

5. Machine de traitement selon l'une quelconque des Revendications 1 à 4, caractérisée en ce qu'elle est équipée d'un dispositif de réception (11—12) des porte-matière (2), situé à la partie supérieure de la tuyauterie axiale susdite, dans un plan horizontal sensiblement situé au-dessus du rayon de carre de la machine.

6. Machine de traitement selon l'une quelconque des Revendications 1 à 5, caractérisée en ce que des corps morts sont prévus entre les porte-matière (2) pour occuper toutes les zones mortes situées entre les piles (22) de matière à traiter portées par les port-matière.

7. Machine de traitement selon la Revendication 6, caractérisée en ce que lesdits corps morts (24) sont solidaires des porte-matière.

8. Machine de traitement selon l'une quelconque des Revendications 1 à 7, caractériséee en ce que la paroi intérieure qui constitue le faux-fond (3) est horizontale.

9. Machine de traitement selon l'une quelconque des Revendications 1 à 7, caractérisée en ce que la paroi intérieure qui constitue le faux-fond (3) est légèrement inclinée suivant une pente descendante depuis la paroi de la machine en direction de la tuyauterie axiale.

10. Machine de traitement selon la Revendication 4, caractérisée en ce que les canalisations intérieures (17) sont non-amovibles et sont fixées à la paroi intérieure de la machine.

11. Machine de traitement selon la Revendication 4, caractérisée en ce que les canalisations intérieures (18) sont amovibles.

12. Machine de traitement selon l'une quelconque des Revendications 1 à 11, caractérisée en ce que le faux-fond (3) est fixe.

13. Machine de traitement selon la Revendication 11, caractérisée en ce que le faux-fond (20) est amovible et en ce que les canalisation intérieures (23) amovibles sont rendues solidaires dudit faux-fond.

14. Machine de traitement selon les Revendications 6 et 13, caractérisée en ce que les corps morts (26) prévus entre le porte-matière (2) sont solidaires du faux-fond (25).

15. Machine de traitement selon l'une quelconque des Revendications 1 à 14, caractérisée en ce qu'au moins un caisson (13) de répartition du bain de traitement, dans lequel circule ledit bain, est associé au porte-matière (2), à la base de la partie de la machine située au-dessus du faux-fond (3), le bain parvenant dans ledit caisson et y étant ramené par la canalisation (5) raccordée audit caisson au niveau de l'ouverture axiale (4) pratiqueée dans le faux-fond (3), ledit caisson (13) étant en outre pourvu de perforations (14) qui assurent le retour plus rapide du bain vers le fond de la machine et sa reprise plus rapide résultante par la pompe.

## Patentansprüche

1. Apparat für die Flüssigkeits- oder Gas-Behandlung von textilen Materialien oder anderen faserigen oder porösen Materialien, und insbesondere für die Wäsche, das Färben und das Bleichen von textilen Materialien, der versehen ist mit Tragemassen (2) und der dadurch gekennzeichnet ist,

daß er in seinem unteren Teil mit einem falschen (doppelten) Boden (3), oder Isolationsplattform ausgerüstet ist, versehen mit Perforationen, der mit dem Boden der Maschine einen Raum (15) oder einen abgedichteten Kasten begrenzt, der kein Bad enthält und in welchem kein Bad zirkuliert, wobei der genannte abgedichtete Kasten mit Luft gefüllt ist und einen Raum (9) umfaßt, der angepaßt ist zum Aufnehmen eines Wärmeaustauschers (10), und der außerdem dadurch charakterisiert ist,

daß der falsche (doppelte) Boden (3), oder Isolationsplattform, eine axiale Öffnung (4) umfaßt, in welcher in abgedichteter Form der obere Teile einer Rohranlage (5) angebracht ist von vertikaler Achse, deren anderes Ende verbunden ist in abgedichteter Form mit dem Raum (9), welcher den Wärmeaustauscher (10) enthält, durch eine Öffnung (6) angebracht im Boden der Maschine, während eine äußere reversible Pumpe (8), vorzugsweise mit horizontaler Achse, angetrieben durch einen Motor mit variabler Geschwindigkeit (29), geeignet das Bad entweder in die Richtung gehend von der obengenannten Öffnung (6) zur Öffnung (4), oder in die entgegengesetzte Richtung, mit einem variablen Durchfluß, zirkulieren zu lassen, in genannter Rohranlage (5) dazwischengestellt ist.

2. Behandlungsapparat gemäß Anspruch 1, dadurch gekennzeichnet, daß der abgedichtete Kasten (15) in abgedichtete Verbindung gebracht wird mit dem oberen Teil der Maschine mittels wenigstens einer Röhre, wobei eine solche Verknüpfung den Druck genannten Kastens (15) bestimmt, zum Etablieren eines Druckgleichgewichtes zwischen der gasförmigen Atmosphäre, die das Bad überragt in dem Teil der Maschine, der angeordnet ist über dem falschen (doppelten) Boden (3), in welchem das Bad in Zirkulation ist, und dem abgedichteten Kasten (15).

3. Behandlungsapparat gemäß Anspruch 2, dadurch gekennzeichnet, daß die abgedichtete Verknüpfung zum Behandlungsbad, hergestellt zwischen dem Kasten (15) und der gasförmigen Atmosphäre, die das Bad überragt, in dem Teil der Maschine, der angeordnet ist über dem falschen (doppelten) Boden (3), dargestellt wird mittels wenigstens einer äußeren Kanalisation (16).

4. Behandlungsapparat gemäß Anspruch 3, dadurch gekennzeichnet, daß die abgedichtete Verknüpfung zum Behandlungsbad, hergestellt zwischen dem Kasten (15) und der gasförmigen Atmosphäre, die das Bad überragt, in dem Teil der Maschine, der oberhalb des falschen (doppelten) Bodens (3) angeordnet ist, dargestellt ist mittels wenigstens einer inneren Kanalisation (18).

5. Behandlungsapparat gemäß einem der Ansprüche 1 bis 3, dadurch gekennzeichnet, daß er mit einer Aufnahmevorrichtung (11—12) von Tragemassen (2), ausgerüstet ist, angeordnet im oberen Teil der obengenannten axialen Rohranlage, in einer horizontalen Ebene, im wesentlichen angeordnet über dem Fach der Dicke des Apparates.

6. Behandlungsapparat gemäß einem der Ansprüche 1 bis 4, dadurch gekennzeichnet, daß tote Gegenstände vorgesehen sind zwischen den Tragemassen (2) zum Besetzen aller toten Zonen, die zwischen den zu behandelnden Materialien-Haufen (22), getragen durch die Tragemassen, angeordnet sind.

7. Behandlungsapparat gemäß Anspruch 5, dadurch gekennzeichnet, daß die toten Gegenstände (24) eng verbunden sind mit den Tragemassen.

8. Behandlungsapparat gemäß einem der Ansprüche 1 bis 7, dadurch gekennzeichnet, daß die innere Wand, die den falschen (doppelten) Boden (3) darstellt, horizontal ist.

9. Behandlungsapparat gemäß einem der Ansprüche 1 bis 8, dadurch gekennzeichnet, daß die innere Wand, die den falschen (doppelten) Boden (3) darstellt, leicht geneigt ist, einer absteigenden Neigungsfläche von der Wand des Apparates in Richtung der axialen Rohranlage folgend.

10. Behandlungsapparat gemäß Anspruch 4, dadurch gekennzeichnet, daß die inneren Kanäle (1) nicht abnehmbar und an der inneren Wand des Apparates befestigt sind.

11. Behandlungsapparat gemäß Anspruch 4, dadurch gekennzeichnet, daß die inneren Kanäle (18) abnehmbar sind.

12. Behandlungsapparat gemäß einem der Ansprüche 1 bis 11, dadurch gekennzeichnet, daß der falsche (doppelte) Boden fixiert ist.

13. Behandlungsapparat gemäß Anspruch 11, dadurch gekennzeichnet, daß der falsche (doppelte) Boden (20) abnehmbar ist und daß die abnehmbaren inneren Kanäle (23) verbindend gemacht sind mit genanntem falschem (doppeltem) Boden.

14. Behandlungsapparat gemäß Ansprüchen 6 und 13, dadurch gekennzeichnet, daß die toten Gegenstände (26), vorgesehen zwischen den Tragemassen (2), verbunden sind mit dem falschen (doppelten) Boden (25).

15. Behandlungsapparat gemäß einem der Ansprüche 1 bis 14, dadurch gekennzeichnet, daß wenigstens ein Fach (13) der Aufteilung des Behandlungsbades, in welchem das genannte Bad zirkuliert, verbunden ist mit Tragemassen (2), am Boden des Teils der Maschine, die angeordnet ist über dem falschen (doppelten) Boden (3), wobei das Bad in genanntem Kasten erreicht und dorthin wieder zurückgebracht wird durch die Kanalisation (5), die mit dem genannten Kasten verbunden ist auf der Höhe der axialen Öffnung (4), angebracht im falschen (doppelten) Boden (3), wobei der genannte Kasten (13) außerdem versehen ist mit Perforationen (14), die die schnellere Rückkehr des Bades zum Boden der Maschine und seine schnellere resultierende Wideraufnahme durch die Pumpe sicherstellen.

## Claims

1. A machine for treating textile materials or other fibrous or porous materials by means of liquids or gases and more especially for washing, dyeing and bleaching textile materials, which machine is equipped with a material carrier (2) and is characterized in that it is equipped, in its lower part, with a false bottom (3), or isolating platform, free of perforations, which defines with the bottom of the machine a sealed space or caisson which contains no bath and in which no bath flows, said sealed caisson being filled with air and comprising a housing (9) for receiving a heat exchanger (10), and in that it is further characterized in that the false bottom (3), or isolating platform, comprises an axial opening (4) in which is sealingly mounted the upper end of a pipe (5) with vertical axis whose other end is sealingly joined to the housing (9) containing the heat exchanger (10) through an opening (6) formed in the bottom of the machine, whereas a reversible external pump (8), preferably with horizontal axis, driven by a variable speed motor (29) for causing the bath to flow either in the direction going from said opening (6) to the opening (4) or in the opposite direction, at a variable rate, is interposed in said pipe (5).

2. The treatment machine according to claim 1, characterized in that the sealed caisson (15) is placed in sealed communication with the upper part of machine, through at least one duct, such communication determining the pressurization of said caisson (15) for establishing a pressure balance between the gaseous atmosphere over the bath in the part of the machine situated above the false bottom (3) in which the bath flows and the sealed caisson (15).

3. The treatment machine according to claim 2, characterized in that the communication sealed with respect to the treatment bath established between the caisson (15) and the gaseous atmosphere over the bath, in the part of the machine situated above the false bottom (3), is provided through at least one external duct (16).

4. The treatment machine according to claim 3, characterized in that the communication, sealed to the treatment bath, established between the caisson (15) and the gaseous atmosphere over the bath, in the part of the machine situated above the false bottom (3), is provided through at least one internal duct (17).

5. The treatment machine according to any one of claims 1 to 4, characterized in that it is equipped with a device (11–12) for receiving the material carrier (2), situated at the upper part of said axial pipe, in a horizontal plane substantially situated above the cross sectional radius of the machine.

6. The treatment machine according to any one of claims 1 to 5, characterized in that filling bodies are provided between the material carriers (2) so as to occupy all the dead zones situated between the stacks (22) of material to be treated carried by the material carriers.

7. The treatment machine according to claim 6, characterized in that said filling bodies (24) are integral with the material carriers.

8. The treatment machine according to any one of claims 1 to 7, characterized in that the inner wall which forms the false bottom (3) is horizontal.

9. The treatment machine according to any one of claims 1 to 7, characterized in that the inner wall which forms the false bottom (3) is slightly inclined with a slope going down from the wall of the machine in the direction of the axial pipe.

10. The treatment machine according to claim 4, characterized in that the inner ducts (17) are irremovable and are fixed to the inner wall of the machine.

11. The treatment machine according to claim 4, characterized in that the inner ducts (18) are removable.

12. The treatment machine according to any one of claims 1 to 11, characterized in that the false bottom (3) is fixed.

13. The treatment machine according to claim 11, characterized in that the false bottom (20) is removable and in that the removable inner ducts (23) are firmly fixed to said false bottom.

14. The treatment machine according to claim 6 and 13, characterized in that the filling bodies (26) provided between the material carriers (2) are firmly fixed to the false bottom (25).

15. The treatment machine according to any one of claims 1 to 14, characterized in that at least one caisson (13) for distributing the treatment bath, in which said bath flows, is associated with the material carrier (2), at the base of the part of the machine situated above the false bottom (3), the bath reaching said caisson and being brought there by the duct (5) connected to said caisson at the level of the axial opening (4) formed in the false bottom (3) said caisson (13) being further provided with perforations (14) so that the bath is returned more rapidly to the bottom of the machine and the taken up more rapidly again by the pump.

0 060 163

FIG. 1

FIG. 2A

FIG. 2 B

FIG.3

FIG.4

# FIG. 5

# FIG. 6

FIG. 7

FIG. 8